(19) **Europäisches Patentamt European Patent Office Office européen des brevets**

(11) **EP 3 333 662 B1**

(12) **EUROPEAN PATENT SPECIFICATION**

(45) Date of publication and mention
of the grant of the patent:
**05.02.2020 Bulletin 2020/06**

(51) Int Cl.:
**G05D 1/00** (2006.01)  **G05D 1/02** (2020.01)

(21) Application number: **16207253.2**

(22) Date of filing: **29.12.2016**

(54) **TELE-OPERATED VEHICLE, AND VEHICLE CONTROL DEVICE AND CONTROL METHOD THEREOF**

FERNBEDIENTES FAHRZEUG UND FAHRZEUGSTEUERUNGSVORRICHTUNG UND STEUERUNGSVERFAHREN DAFÜR

VÉHICULE TÉLÉCOMMANDÉ, DISPOSITIF DE COMMANDE DE VÉHICULE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2016 TW 105141094**

(43) Date of publication of application:
**13.06.2018 Bulletin 2018/24**

(73) Proprietor: **Industrial Technology Research Institute Chutung, Hsinchu 31040 (TW)**

(72) Inventors:
• **Hou, Hsiang-Wen**
 **708 Tainan City (TW)**
• **Liu, Keng-Hao**
 **248 New Taipei City (TW)**
• **Tsai, Yu-Shen**
 **812 Kaohsiung City (TW)**
• **Jeng, An-Kai**
 **300 Hsinchu City (TW)**
• **Li, Kang**
 **106 Taipei City (TW)**

(74) Representative: **Becker Kurig Straus Patentanwälte Bavariastrasse 7 80336 München (DE)**

(56) References cited:
**US-A1- 2016 139 594    US-A1- 2016 334 230 US-A1- 2016 358 475**

**Description**

BACKGROUND

Field of the Disclosure

The disclosure relates to a tele-operated vehicle (TOV), a vehicle control device of the TOV and a control method of the TOV.

Description of Related Art

Existing unmanned vehicle control mechanisms are divided into two types of automatic (autonomous) driving and remote control driving. An automatic (autonomous) driving vehicle is installed with a plurality of sensors, a computing unit and a control unit. According to the complexity of the algorithm, the computing unit and the control unit on the automatic driving vehicle may execute a single driving behaviour or multiple driving behaviours. A remote control driving vehicle is installed with a communication unit and a control unit. The communication unit receives a control command from a remote operator (a remote control platform), and the control unit on the remote control driving vehicle may execute the control command to implement vehicle control.

In the aforementioned two unmanned vehicle control mechanisms, development of automatic (autonomous) driving is still immature. The automatic (autonomous) driving mostly has limited functions, or is a specific application under a specific environment. Although the remote control driving vehicle can be controlled according to the intention of the remote operator (the remote control platform), in case of poor communication quality and limited awareness of the remote operator on a driving environment, a performance of the remote control driving vehicle is not as well as a performance of a general vehicle (a vehicle with a driver).

US 2016/334230 A1 discloses that an event is detected that impairs a confidence level of the autonomous vehicle in progressing through a current route. In response to detecting the event, the autonomous vehicle communicates information about the event to a remote source of guidance. The autonomous vehicle can receive instructions from the remote source of guidance on how to handle the event. The autonomous vehicle can then implement the instructions to handle the event while it operates.

US 2016/139594 A1 discloses computer devices, systems, and methods for remotely operating an autonomous passenger vehicle. When an autonomous vehicle encounters an unexpected driving environment unsuitable for autonomous operation, such as road construction or an obstruction, vehicle sensors can capture data about the vehicle and the unexpected driving environment, including images, radar and lidar data, etc. The captured data can be sent to a remote operator. The remote operator can manually operate the vehicle remotely or issue commands to the autonomous vehicle to be executed by on various vehicle systems.

US 2016/358475 A1 discloses the transfer of data from an autonomous vehicle to a remote operation computing system while the autonomous vehicle is operating in a remote operational mode. A driving environment of the autonomous vehicle can be sensed using a sensor system to acquire driving environment data. The sensor system includes a plurality of different types of sensors. A driving environment complexity can be determined. The availability of a communication channel between the autonomous vehicle and the remote operation computing system can be determined. A subset of the plurality of different types of sensors can be selected based on the determined driving environment complexity and/or the determined communication channel availability and/or its quality.

SUMMARY

The present invention is provided by the appended claims. The following disclosure serves a better understanding of the invention. The disclosure is directed to a tele-operated vehicle (TOV) and a vehicle control device and a control method thereof. The vehicle control device and the control method may combine an automatic (autonomous) driving mode with a remote control driving mode. A remote operator (a remote control platform) may make up for deficiency of an automatic (autonomous) driving algorithm, and the automatic (autonomous) driving may correct a poor control command of the remote operator (a remote control platform).

The disclosure provides a tele-operated vehicle (TOV) including a communication circuit, at least one sensor, a vehicle control device and a driving circuit. The sensor is configured to sense an environment of the TOV. The vehicle control device is coupled to the communication circuit to receive a remote driving command from a remote control platform. The vehicle control device is coupled to the sensor to receive a sensing result. The vehicle control device generates an automatic driving command based on the sensing result. The vehicle control device determines an actual control command based on the remote driving command and the automatic driving command. The driving circuit is coupled to the vehicle control device to receive the actual control command. The driving circuit drives the TOV according to the actual control command.

Preferably, the disclosure provides a vehicle control device including an automatic driving circuit and a lane keeping circuit. The automatic driving circuit is coupled to at least one sensor of a tele-operated vehicle (TOV) to receive a sensing result related to an environment of the TOV. The automatic driving circuit calculates an automatic driving path according to the sensing result, and determines an automatic driving command according to the automatic driving path. The lane keeping circuit is coupled to the automatic driving circuit to receive the automatic driving command. The lane keeping circuit receives a remote driving command from a remote control platform through a communication circuit of the TOV. The lane keeping circuit determines an actual control command based on the remote driving command and the automatic driving command. The lane keeping circuit controls a driving circuit of the TOV according to the actual control command, so as to drive the TOV.

Preferably, the disclosure provides a control method of a tele-operated vehicle (TOV). The TOV includes a communication circuit, at least one sensor, a vehicle control device and a driving circuit. The control method includes: sensing an environment of the TOV by the sensor to obtain a sensing result; generating an automatic driving command by the vehicle control device based on the sensing result; receiving a remote driving command from a remote control platform by the communication circuit; determining an actual control command by the vehicle control device based on the remote driving command and the automatic driving command; and driving the TOV by the driving circuit according to the actual control command.

According to the above description, the vehicle control device and the control method thereof provided by the embodiments of the disclosure can be applied to vehicles having a remote control function and an automatic (autonomous) driving function. The remote control platform may send the remote driving command to the TOV, and the driving circuit correspondingly drives the TOV (for example, steering, speed control, etc.). Therefore, a driving operation of the remote operator (the remote control platform) may compensate deficiency of an automatic (autonomous) driving algorithm. Meanwhile, the automatic driving command of the automatic (autonomous) driving may correct a poor remote driving command of the remote operator (the remote control platform).

Several exemplary embodiments accompanied with figures are described in detail below to further describe the disclosure in details

BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.

FIG. 1 is a circuit block schematic diagram of a tele-operated vehicle (TOV) according to an embodiment of the disclosure.
FIG. 2 is a flowchart illustrating a control method of the TOV according to an embodiment of the disclosure.
FIG. 3 is a schematic diagram illustrating a situation that the TOV moves in a lane according to an embodiment of the disclosure.
FIG. 4 is a schematic diagram illustrating a situation that the TOV moves in a lane according to another embodiment of the disclosure.
FIG. 5 is a schematic diagram illustrating a situation that the TOV modifies a remote driving command B according to an automatic driving command A.
FIG. 6 is a schematic diagram of a field of view (FOV) image along a moving direction captured by a video camera of the TOV in case of the situation of FIG. 5.

DESCRIPTION OF EMBODIMENTS

A term "couple (or connect)" used in the full text of the disclosure (including the claims) refers to any direct and indirect connections. For example, if a first device is described to be coupled to a second device, it is interpreted as that the first device is directly coupled to the second device, or the first device is indirectly coupled to the second device through other devices or connection means. Moreover, wherever possible, components/members/steps using the same referential numbers in the drawings and description refer to the same or like parts. Components/members/steps using the same referential numbers or using the same terms in different embodiments may cross-refer related descriptions.

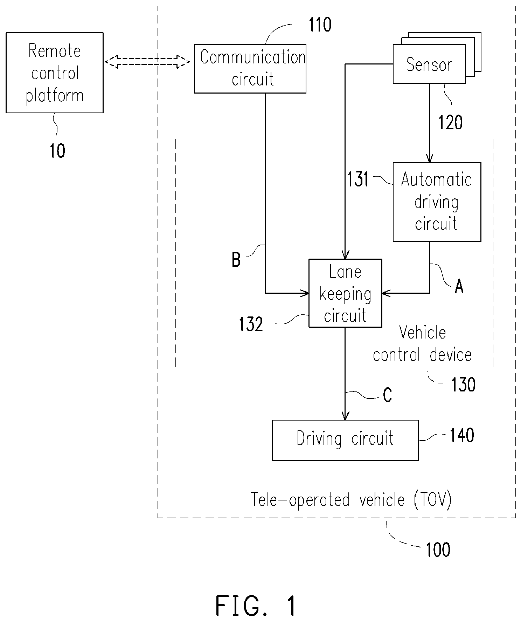

FIG. 1 is a circuit block schematic diagram of a tele-operated vehicle (TOV) 100 according to an embodiment of the disclosure. The TOV 100 of FIG. 1 includes a communication circuit 110, one or a plurality of sensors 120, a vehicle control device 130 and a driving circuit 140. The sensor 120 is configured to sense an environment of the TOV 100. The vehicle control device 130 is coupled to the sensor 120 to receive a sensing result. For example, the sensor 120 may detect a distance between the TOV 100 and other object (for example, other vehicle, a pedestrian, etc.), and the vehicle control device 130 may track the dynamic object (for example, the other vehicle, the pedestrian, etc.) near the TOV 100 according to the sensing result of the sensor 120. Moreover, the vehicle control device 130 may calculate a drivable area and an optimal path according to the sensing result of the sensor 120. Implementation of "calculating the optimal path" is not limited by the present embodiment. According to a design requirement, the implementation of "calculating the optimal path" may adopt the conventional "optimal path" algorithm or other algorithms. Therefore, the vehicle control device 130 may generate an automatic driving command A according to the sensing result.

The communication circuit 110 can be a wireless communication circuit, which is, for example, a long term evolution (LTE) (or a 4th generation (4G) mobile communication network) circuit, a dedicated short-range communications (DSRC) circuit or other communication circuit. A remote control platform 10 outside the TOV 100 can be connected with the communication circuit. The vehicle control device 130 is coupled to the communication circuit 110 to receive a remote driving command B (a control command of a remote operator) coming from the remote control platform 10. The vehicle control device 130 may determine an actual control command C based on the remote driving command B and the automatic driving command A. For example (though the disclosure is not limited thereto), if the control command of the remote operator (the remote driving command B) does not make the TOV 100 to go out of the drivable area, the vehicle control device 130 takes the remote driving command B as the actual control command C for outputting to the driving circuit 140. Conversely, if the control command of the remote operator (the remote driving command B) may make the TOV 100 to go out of the drivable area, the vehicle control device 130 may mix the remote driving command B and the automatic driving command A to produce the actual control command C for outputting to the driving circuit 140. When the communication between the remote control platform 10 and the TOV 100 is interrupted, or a communication delay is too large, the vehicle control device 130 may take the automatic driving command A as the actual control command C for outputting to the driving circuit 140.

The driving circuit 140 is coupled to the vehicle control device 130 to receive the actual control command C. The driving circuit 140 correspondingly drives the TOV 100 according to the actual control command C. For example (though the disclosure is not limited thereto), the driving circuit 140 may correspondingly drive a steering mechanism of the TOV 100 according to the actual control command C, so as to change a moving direction of the TOV 100. Alternatively, the driving circuit 140 may correspondingly drive a speed control mechanism of the TOV 100 according to the actual control command C, so as to change a moving speed of the TOV 100 (for example, to accelerate or stop the TOV 100).

In the embodiment of FIG. 1, the vehicle control device 130 includes an automatic driving circuit 131 and a lane keeping circuit 132. The automatic driving circuit 131 is coupled to the sensor 120 of the TOV to receive the sensing result related to the environment of the TOV 100. The automatic driving circuit 131 calculates an automatic driving path according to the sensing result of the sensor 120, and determines an automatic driving command A according to the automatic driving path. Implementation of "calculating the automatic driving path" is not limited by the present embodiment. According to a design requirement, the implementation of "calculating the automatic driving path" may adopt the conventional "optimal path" algorithm or other algorithm.

The lane keeping circuit 132 is coupled to the automatic driving circuit 131 to receive the automatic driving command A. The lane keeping circuit 132 receives the remote driving command B from the remote control platform 10 through the communication circuit 110 of the TOV 100. The lane keeping circuit 132 determines the actual control command C based on the remote driving command B and the automatic driving command A. The lane keeping circuit 132 controls the driving circuit 140 of the TOV 100 according to the actual control command C, so as to drive the TOV 100.

For example, the lane keeping circuit 132 may determine whether the remote driving command B makes the TOV 100 to be in an unsafe condition according to the sensing result of the sensor 120. When the lane keeping circuit 132 determines that the remote driving command B may make the TOV 100 to be in the unsafe condition, the lane keeping circuit 132 may modify the remote driving command B according to the automatic driving command A, so as to obtain the actual control command C.

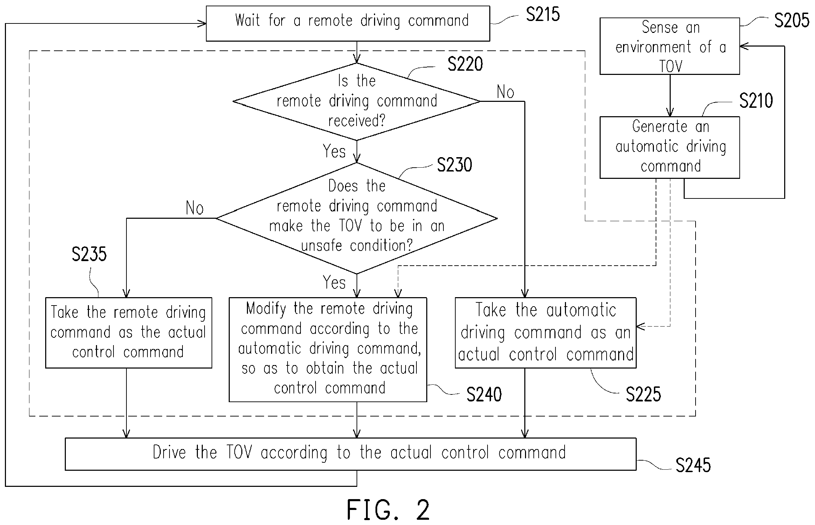

FIG. 2 is a flowchart illustrating a control method of the TOV 100 according to an embodiment of the disclosure. In step S205, the sensor 120 may sense an environment of the TOV 100. In step S210, the automatic driving circuit 131 may calculate a drivable area and an automatic driving path according to the sensing result of the sensor 120, and determines the automatic driving command A according to the automatic driving path. The step S205 and the step S210 are repeatedly executed in order to dynamically modify the automatic driving command A according to the environment of the TOV 100 in real-time.

For example, according to the design requirement, the sensor 120 may include a video camera or an optical radar sensor. When the sensor 120 is the video camera, the sensor 120 may capture a field of view (FOV) image along a moving direction of the TOV 100. The FOV image can be transmitted back to the remote control platform 10 through the communication circuit 110. Moreover, the FOV image can also be provided to the automatic driving circuit 131. The automatic driving circuit 131 performs image recognition to the FOV image to calculate the drivable area and the automatic driving path. According to a design requirement, implementation of the "image recognition" may adopt the conventional algorithm or other algorithms. When the sensor 120 is the optical radar sensor, the sensor 120 may emit laser lights and receive the laser lights reflected by objects. By using an optical radar detection technique, the sensor 120 (or the vehicle control device 130) may calculate relative moving coordinates of the objects (vehicles or pedestrians) around the TOV 100 relative to the sensor 120. According to a design requirement, the optical radar detection technique can be the conventional radar detection technique or other detection techniques.

In step S215, the lane keeping circuit 132 waits and receives the remote driving command B coming from the remote platform 10 through the communication circuit 110. The step S210 and the step S215 are independent to each other and are executed in the same time. In step S220, the lane keeping circuit 132 determines whether the remote driving command B is received from the remote control platform 10. In case of a poor communication condition (for example, the communication is unstable, interrupted, or delay thereof is excessively large, etc.), the lane keeping circuit 132 is probably unable to receive the remote driving command B. In case that the remote driving command B cannot be received, the lane keeping circuit 132 may execute a step S225. In the step S225, the lane keeping circuit 132 may take the automatic driving command A as the actual control command C for outputting to the driving circuit 140.

When it is determined that the remote driving command B is received from the remote control platform 10 in the step S220, the lane keeping circuit 132 may execute a step S230. In the step S230, the lane keeping circuit 132 determines whether the remote driving command B makes the TOV 100 to be in the unsafe condition. When the lane keeping circuit 132 determines that the remote driving command B does not make the TOV 100 to be in the unsafe condition, the lane keeping circuit 132 may take the remote driving command B as the actual control command C for outputting to the driving circuit 140 (step S235). When the lane keeping circuit 132 determines that the remote driving command B may make the TOV 100 to be in the unsafe condition, the lane keeping circuit 132 may modify the remote driving command B according to the automatic driving command A, so as to obtain the actual control command C (step S240).

The lane keeping circuit 132 may calculate a prediction path according to the remote driving command B. According to the prediction path, the lane keeping circuit 132 may determine whether the remote driving command B makes the TOV 100 to depart from the drivable area. For example, the lane keeping circuit 132 may adopt a trajectory prediction formula to predict a trajectory (the prediction path) of the remote driving command B. In the present embodiment, the lane keeping circuit 132 may adopt a conventional bicycle model (a following equation (1)) to serve as the trajectory prediction formula. In the equation (1), $y$ represents a lateral position of the TOV 100 in the drivable area, $\dot{y}$ represents a lateral speed of the TOV 100, $\Psi$ represents a yaw-angle, $\dot{\Psi}$ represents a yaw-rate, $C_{af}$ and $C_{ar}$ are respectively cornering stiffness of front and rear wheels, $l_f$ is a distance between the front wheel and a center of gravity, $l_r$ is a distance between the rear wheel and the center of gravity, $m$ is a vehicle weight of the TOV 100, $V_x$ is a longitudinal velocity of the TOV 100, $I_z$ is a rotary inertia, and $\delta$ is a front wheel rotation angle.

$$\frac{d}{dt}\begin{Bmatrix} y \\ \dot{y} \\ \psi \\ \dot{\psi} \end{Bmatrix} = \begin{bmatrix} 0 & 1 & 0 & 0 \\ 0 & -\dfrac{2C_{af}+2C_{ar}}{mV_x} & 0 & -V_x - \dfrac{2C_{af}l_f - 2C_{ar}l_r}{mV_x} \\ 0 & 0 & 0 & 1 \\ 0 & -\dfrac{2l_f C_{af} - 2l_r C_{ar}}{I_z V_x} & 0 & -\dfrac{2l_f^{\,2} C_{af} + 2l_r^{\,2} C_{ar}}{I_z V_x} \end{bmatrix} \cdot \begin{Bmatrix} y \\ \dot{y} \\ \psi \\ \dot{\psi} \end{Bmatrix} + \begin{Bmatrix} 0 \\ \dfrac{2C_{af}}{m} \\ 0 \\ \dfrac{2l_f C_{af}}{I_z} \end{Bmatrix}\delta$$

Equation (1)

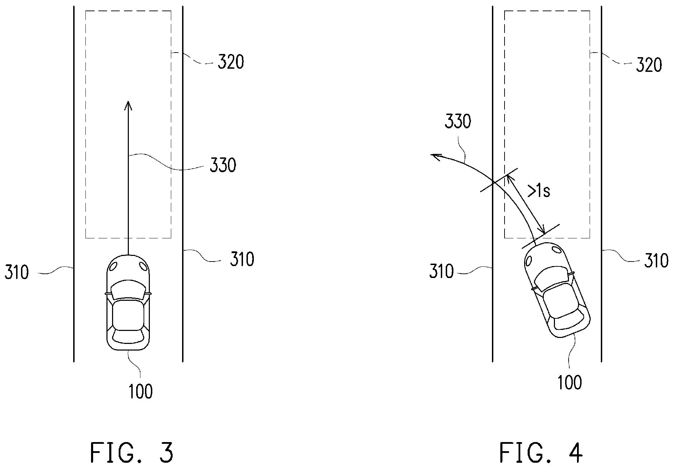

FIG. 3 is a schematic diagram illustrating a situation that the TOV 100 moves in a lane according to an embodiment of the disclosure. In the situation shown in FIG. 3, the TOV 100 is driven to move in a lane, i.e. between two lane lines 310. A video camera (the sensor 120) may capture a FOV image along a moving direction of the TOV 100. The automatic driving circuit 131 may perform image recognition to the FOV image to calculate a drivable area 320. The lane keeping circuit 132 may adopt the trajectory prediction formula to predict a trajectory (a prediction path 330) of the remote driving command B. According to the design requirement, the calculation method of the prediction path 330 may adopt a convention algorithm or other algorithms. When the lane keeping circuit 132 determines that the remote driving command B does not make the TOV 100 to depart from the drivable area 320, the lane keeping circuit 132 may take the remote driving command B as the actual control command C for outputting to the driving circuit 140 (the step S235).

FIG. 4 is a schematic diagram illustrating a situation that the TOV 100 moves in a lane according to another embodiment of the disclosure. In the situation shown in FIG. 4, the prediction path 330 indicates that the TOV 100 will depart from the drivable area 320 within one second. Therefore, the lane keeping circuit 132 determines that "the remote driving command B may make the TOV 100 to depart from the drivable area 320". Namely, the lane keeping circuit 132 determines that the remote driving command B may make the TOV 100 to be in the unsafe condition. The embodiment of the disclosure is not limited to the situation that the TOV 100 will depart from the drivable area 320 within one second, and the time for the TOV 100 departing from the drivable area 320 can be adjusted and determined according to a speed or the environment of the TOV 100.

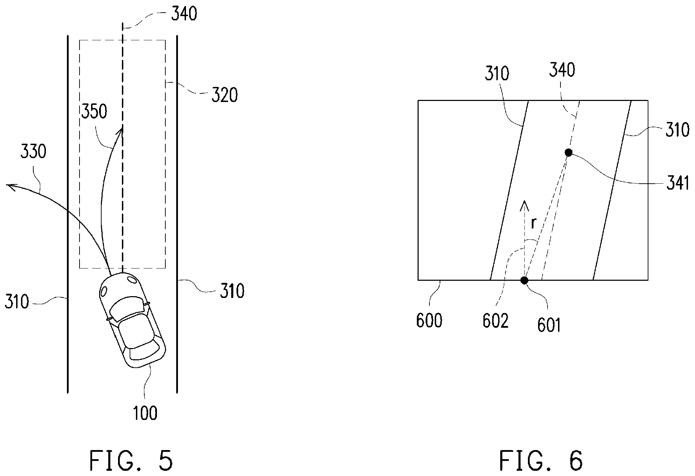

FIG. 5 is a schematic diagram illustrating a situation that the TOV 100 modifies the remote driving command B according to the automatic driving command A. In the situation shown in FIG. 5, an automatic driving path 340 represents the prediction path of the automatic driving command A, and the prediction path 330 represents a prediction path of the remote driving command B. The prediction path 330 indicates that the TOV 100 will depart from the drivable area 320 within one second. When the lane keeping circuit 132 determines that the remote driving command B may make the TOV 100 to depart from the drivable area 320, the lane keeping circuit 132 may modify the remote driving command B according to the automatic driving command A to obtain the actual control command C (step S240). Shown as an actual path 350 of FIG. 5, the actual control command C (the modified remote driving command) may make the TOV 100 to come back to the drivable area 320.

FIG. 6 is a schematic diagram of a FOV image along the moving direction captured by the video camera (the sensor 120) of the TOV 100 in case of the situation of FIG. 5 according to another embodiment of the disclosure. An image 600 is the FOV image along the moving direction of the TOV 100 captured by the video camera (the sensor 120). A location 601 shown in FIG. 6 is a location of the TOV 100, and a direction 602 is a direction of the TOV 100. The automatic driving circuit 131 may calculate the automatic driving path 340 to serve as the automatic driving command A. When the lane keeping circuit 132 determines that the remote driving command B may make the TOV 100 to be in the unsafe condition, the automatic driving command A is introduced to adjust the actual control command C. For example, the lane keeping circuit 132 may set a target point 341 on a follow path of the automatic driving (the automatic driving path 340). For example (though the disclosure is not limited thereto), a distance between the location 601 of the TOV 100 and the target point 341 can be a moving distance of the TOV 100 after one second predicted according to a current speed of the TOV 100. An included angle between the direction 602 and a moving direction of the TOV 100 from the location 601 to the target point 341 is a modifying angle $\gamma$. The lane keeping circuit 132 may take the modifying angle $\gamma$ as the actual control command C. The actual control command C ($\gamma$) is taken as the front wheel rotation angle $\delta$ in the equation (1), and the actual control command C ($\gamma$) is substituted into the equation (1) to calculate a modified trajectory, i.e. the actual path 350 of the TOV 100.

The method of generating the actual control command C is not limited to the aforementioned embodiment. For example, in some other embodiments, the lane keeping circuit 132 may calculate an equation (2) to obtain the actual control command C. In the equation (2), A represents the automatic driving command, B represents the remote driving command, and a weight w is a real number and $0 \leq w \leq 1$.

$$C = (w)A + (1-w)B \qquad\qquad \text{Equation (2)}$$

The automatic driving circuit 131 may calculate the automatic driving path according to the sensing result of the sensor 120, and determine the automatic driving command A according to the automatic driving path. When the lane keeping circuit 132 determines that the remote driving command B does not make the TOV 100 to be in the unsafe condition (for example, the situation shown in FIG. 3), the weight w in the equation (2) can be set to 0 (the step S235). When the lane keeping circuit 132 determines that the remote driving command B makes the TOV 100 to be in the unsafe condition (for example, the situation shown in FIG. 4), the weight w in the equation (2) can be set to a real number greater than 0 and smaller than 1 (the step S240). When the lane keeping circuit 132 determines that the TOV 100 cannot receive the remote driving command B from the remote control platform 10, the weight w in the equation (2) can be set to 1 (the step S225).

Referring to FIG. 2, in step S245, the driving circuit 140 may correspondingly drive the TOV 100 according to the actual control command C. For example (though the disclosure is not limited thereto), the driving circuit 140 may correspondingly drive the steering mechanism of the TOV according to the actual control command C, so as to change a moving direction of the TOV 100. Alternatively, the driving circuit 140 may correspondingly drive a speed control mechanism of the TOV 100 according to the actual control command C, so as to change a moving speed of the TOV 100 (for example, to accelerate or stop the TOV 100).

It should be noted that in different application situations, related functions of the vehicle control device 130, the automatic driving circuit 131, the lane keeping circuit 132 and/or the driving circuit 140 can be implemented as software, firmware or hardware through general programming languages (for example, C or C++), hardware description languages (for example, Verilog HDL or VHDL) or other suitable programming languages. The software (or firmware) capable of executing the related functions can be stored in any known computer-accessible medias, for example, magnetic tapes, semiconductor memories, magnetic disks or compact disks (for example, CD-ROM or DVD-ROM), or the software (or firmware) can be transmitted through the Internet, wired communication, wireless communication or other communication media. The software (or firmware) can be stored in computer-accessible media to facilitate a processor of a computer to access/execute programming codes of the software (or firmware). Moreover, the apparatus and method of the disclosure can be implemented through a combination of hardware and software.

In summary, the TOV 100 of the embodiments of the disclosure can be applied to vehicles having a remote control function and an automatic (autonomous) driving function. The TOV 100 is installed with the communication circuit 110, the sensor 120 and the vehicle control device 130. The automatic driving circuit 131 of the vehicle control device 130 may dynamically calculate an optimal driving path (the automatic driving command A) according to a driving area, a communication status and surrounding objects. When the remote driving command B of the remote operator (the remote control platform 10) is interrupted, or the remote driving command B may cause a danger (for example, the TOV 100 is about to collide with a lateral vehicle, or the TOV 100 is about to exceeds the drivable region 320), the lane keeping circuit 132 of the vehicle control device 130 may modify the remote driving command B according to the optimal driving path (the automatic driving command A) until the TOV 100 returns back to a safe state. In case that the communication status is normal and the remote driving command B is safe, the lane keeping circuit 132 executes the remote driving command B in priority.

**Claims**

1.   A tele-operated vehicle (100), comprising:

>   a communication circuit (110);
>   at least one sensor (120), configured to sense an environment of the tele-operated vehicle (100);
>   a vehicle control device (130), coupled to the communication circuit (110) to receive a remote driving command from a remote control platform (10), and coupled to the sensor (120) to receive a sensing result, the tele-operated vehicle (100) being **characterized in that**
>   the vehicle control device (130) generates an automatic driving command based on the sensing result, and determines an actual control command based on the remote driving command and the automatic driving command when the remote driving command is received; and
>   a driving circuit (140), coupled to the vehicle control device (130) to receive the actual control command, and configured to drive the tele-operated vehicle (100) according to the actual control command,
>   wherein the vehicle control device (130) comprises:
>
>>   an automatic driving circuit (131), coupled to the sensor (120) to receive the sensing result, and configured to calculate an automatic driving path according to the sensing result, and determine the automatic driving command according to the automatic driving path; and
>>   a lane keeping circuit (132), coupled to the automatic driving circuit (131) to receive the automatic driving command, and coupled to the communication circuit (110) to receive the remote driving command, and configured to determine whether the remote driving command makes the tele-operated vehicle (100) to be in an unsafe condition, wherein when the lane keeping circuit (132) determines that the remote driving command does not make the tele-operated vehicle (100) to be in the unsafe condition, the lane keeping circuit (132) takes the remote driving command as the actual control command, wherein when the lane keeping circuit (132) determines that the remote driving command makes the tele-operated vehicle (100) to be in the unsafe condition, the lane keeping circuit (132) modifies the remote driving command according to the automatic driving command to obtain the actual control command.

2.   The tele-operated vehicle as claimed in claim 1, **characterized in that**
the automatic driving circuit (131) is coupled to the sensor (120) to receive a field of view image of the tele-operated vehicle (100), and is configured to calculate an automatic driving path to serve as the automatic driving command; wherein when the lane keeping circuit (132) determines that the remote driving command makes the tele-operated vehicle (100) to be in the unsafe condition, the lane keeping circuit (132) sets a target point on the automatic driving path, and takes an included angle between a direction of the tele-operated vehicle (100) and a moving direction of the tele-operated vehicle (100) from a location of the tele-operated vehicle (100) to the target point as the actual control command.

3.   The tele-operated vehicle as claimed in claim 1, **characterized in that** the lane keeping circuit (132) calculates a prediction path according to the remote driving command, and determines whether the remote driving command makes the tele-operated vehicle (100) to depart from a drivable area according to the prediction path.

4.   The tele-operated vehicle as claimed in claim 1, **characterized in that** the lane keeping circuit (132) calculates an equation C=(w)A+(1-w)B to obtain the actual control command C, wherein A represents the automatic driving command, B represents the remote driving command, and a weight w is a real number and 0≤w≤1, wherein the weight w is set to 0 when the lane keeping circuit (132) determines that the remote driving command B does not make the tele-operated vehicle (100) to be in the unsafe condition, wherein the weight w is set to 1 when the lane keeping circuit (132) determines that the tele-operated vehicle (100) is unable to receive the remote driving command B from the remote control platform (10).

5. A control method of a tele-operated vehicle, wherein the tele-operated vehicle (100), as claimed in claim 1, comprises a communication circuit (110), at least one sensor (120), a vehicle control device (130) and a driving circuit (140), the control method of the tele-operated vehicle (100) comprising:

sensing an environment of the tele-operated vehicle (100) by the sensor (120) to obtain a sensing result (S205);
the method being **characterized by** further comprising
generating an automatic driving command by the vehicle control device (130) based on the sensing result (S210);
calculating an automatic driving path by an automatic driving circuit (131) according to the sensing result;
determining the automatic driving command by the automatic driving circuit (131) according to the automatic driving path;
receiving a remote driving command from a remote control platform (10) by the communication circuit (110) (S220);
determining an actual control command by the vehicle control device (130) based on the remote driving command and the automatic driving command when the remote driving command is received (S225, S235, S240); and
determining whether the remote driving command makes the tele-operated vehicle (100) to be in an unsafe condition by a lane keeping circuit (132);
taking the remote driving command as the actual control command when the lane keeping circuit (132) determines that the remote driving command does not make the tele-operated vehicle (100) to be in the unsafe condition;
modifying the remote driving command by the lane keeping circuit (132) according to the automatic driving command to obtain the actual control command when the lane keeping circuit (132) determines that the remote driving command makes the tele-operated vehicle (100) to be in the unsafe condition;
driving the tele-operated vehicle (100) by the driving circuit (140) according to the actual control command (S245).

6. The control method of the tele-operated vehicle as claimed in claim 5, **characterized in that** the step of determining whether the remote driving command makes the tele-operated vehicle (100) to be in the unsafe condition comprises:

calculating a prediction path by the lane keeping circuit (132) according to the remote driving command; and
determining whether the remote driving command makes the tele-operated vehicle (100) to depart from a drivable area by the lane keeping circuit (132) according to the prediction path.

7. The control method of the tele-operated vehicle as claimed in claim 5, **characterized in that** the vehicle control device (130) receives a field of view image of the tele-operated vehicle (100), and calculates an automatic driving path to serve as the automatic driving command, and the step of determining the actual control command comprises:

determining whether the remote driving command makes the tele-operated vehicle (100) to be in the unsafe condition by a lane keeping circuit (132); and
setting a target point on the automatic driving path by the lane keeping circuit (132), and taking an included angle between a direction of the tele-operated vehicle (100) and a moving direction of the tele-operated vehicle (100) from a location of the tele-operated vehicle (100) to the target point as the actual control command by the lane keeping circuit (132) when the lane keeping circuit (132) determines that the remote driving command makes the tele-operated vehicle (100) to be in the unsafe condition.

8. The control method of the tele-operated vehicle as claimed in claim 5, **characterized in that** the step of determining the actual control command comprises:

calculating an equation C=(w)A+(1-w)B by the lane keeping circuit (132) to obtain the actual control command C, wherein A represents the automatic driving command, B represents the remote driving command, and a weight w is a real number and 0≤w≤1;
setting the weight w to 0 when the lane keeping circuit (132) determines that the remote driving command B

does not make the tele-operated vehicle (100) to be in the unsafe condition; and
setting the weight w to 1 when the lane keeping circuit (132) determines that the tele-operated vehicle (100) is unable to receive the remote driving command B from the remote control platform (10).

**Patentansprüche**

1. Fernbedientes Fahrzeug (100), umfassend:

   eine Kommunikationsschaltung (110);
   mindestens einen Sensor (120), der konfiguriert ist, um eine Umgebung des fernbedienten Fahrzeugs (100) zu erfassen;
   eine Fahrzeugsteuervorrichtung (130), die mit der Kommunikationsschaltung (110) gekoppelt ist, um einen Fernfahrbefehl von einer Fernsteuerungsplattform (10) zu empfangen, und mit dem Sensor (120) gekoppelt ist, um ein Erfassungsergebnis zu empfangen, wobei das fernbediente Fahrzeug (100) **dadurch gekennzeichnet ist, dass**
   die Fahrzeugsteuervorrichtung (130) einen automatischen Fahrbefehl basierend auf dem Erfassungsergebnis erzeugt und einen tatsächlichen Steuerbefehl basierend auf dem Fernfahrbefehl und dem automatischen Fahrbefehl bestimmt, wenn der Fernfahrbefehl empfangen wird; und
   eine Fahrschaltung (140), die mit der Fahrzeugsteuervorrichtung (130) gekoppelt ist, um den tatsächlichen Steuerbefehl zu empfangen, und konfiguriert ist, das fernbediente Fahrzeug (100) gemäß dem tatsächlichen Steuerbefehl zu fahren,
   wobei die Fahrzeugsteuervorrichtung (130) umfasst:

   eine automatische Fahrschaltung (131), die mit dem Sensor (120) gekoppelt ist, um das Erfassungsergebnis zu empfangen, und konfiguriert ist, einen automatischen Fahrweg gemäß dem Erfassungsergebnis zu berechnen und den automatischen Fahrbefehl gemäß dem automatischen Fahrweg zu bestimmen; und
   eine Fahrspurhalteschaltung (132), die mit der automatischen Fahrschaltung (131) gekoppelt ist, um den automatischen Fahrbefehl zu empfangen, und mit der Kommunikationsschaltung (110) gekoppelt ist, um den Fernfahrbefehl zu empfangen, und konfiguriert ist, um zu bestimmen, ob der Fernfahrbefehl das fernbediente Fahrzeug (100) veranlasst in einem unsicheren Zustand zu sein, wobei, wenn die Fahrspurhalteschaltung (132) bestimmt, dass der Fernfahrbefehl das fernbediente Fahrzeug (100) veranlasst nicht in dem unsicheren Zustand zu sein, die Fahrspurhalteschaltung (132) den Fernfahrbefehl als den eigentlichen Steuerbefehl annimmt, wobei, wenn die Fahrspurhalteschaltung (132) bestimmt, dass der Fernfahrbefehl das fernbediente Fahrzeug (100) veranlasst in dem unsicheren Zustand zu sein, die Fahrspurhalteschaltung (132) den Fernfahrbefehl gemäß dem automatischen Fahrbefehl ändert, um den tatsächlichen Steuerbefehl zu erhalten.

2. Fernbedientes Fahrzeug gemäß Anspruch 1, **dadurch gekennzeichnet, dass**
   die automatische Fahrschaltung (131) mit dem Sensor (120) gekoppelt ist, um ein Sichtfeld-Bild des fernbedienten Fahrzeugs (100) zu empfangen, und konfiguriert ist, um einen automatischen Fahrweg zu berechnen, der als der automatische Fahrbefehl dient;
   wobei, wenn die Fahrspurhalteschaltung (132) bestimmt, dass der Fernfahrbefehl das fernbediente Fahrzeug (100) veranlasst in dem unsicheren Zustand zu sein, die Fahrspurhalteschaltung (132) einen Zielpunkt auf dem automatischen Fahrweg einstellt und einen eingeschlossenen Winkel zwischen einer Richtung des fernbedientes Fahrzeugs (100) und einer Bewegungsrichtung des fernbedienten Fahrzeugs (100) von einer Position des fernbedientes Fahrzeugs (100) zum Zielpunkt als tatsächlichen Steuerbefehl nimmt.

3. Fernbedientes Fahrzeug gemäß Anspruch 1, **dadurch gekennzeichnet, dass** die Fahrspurhalteschaltung (132) einen Vorhersageweg gemäß dem Fernfahrbefehl berechnet und bestimmt, ob der Fernfahrbefehl das fernbedientes Fahrzeug (100) veranlasst, gemäß dem Vorhersageweg, von einem fahrbaren Bereich abzuweichen.

4. Fernbedientes Fahrzeug gemäß Anspruch 1, **dadurch gekennzeichnet, dass** die Fahrspurhalteschaltung (132) eine Gleichung $C=(w)A+(1-w)B$ berechnet, um den tatsächlichen Steuerbefehl $C$ zu erhalten, wobei $A$ den automatischen Fahrbefehl darstellt, $B$ den Fernfahrbefehl darstellt und ein Gewicht $w$ eine reelle Zahl und $0 \leq w \leq 1$ ist, wobei das Gewicht $w$ auf 0 gesetzt wird, wenn die Fahrspurhalteschaltung (132) bestimmt, dass der Fernfahrbefehl $B$ das fernbediente Fahrzeug (100) nicht in den unsicheren Zustand versetzt, wobei das Gewicht $w$ auf 1 gesetzt wird, wenn die Fahrspurhalteschaltung (132) bestimmt, dass das fernbediente Fahrzeug (100) nicht in der Lage ist, den Fernfahrbefehl B von der Fernsteuerungsplattform (10) zu empfangen.

5. Steuerverfahren eines fernbedienten Fahrzeugs, wobei das fernbediente Fahrzeug (100), gemäß Anspruch 1, eine Kommunikationsschaltung (110), mindestens einen Sensor (120), eine Fahrzeugsteuervorrichtung (130) und eine Fahrschaltung (140) umfasst, wobei das Steuerverfahren des fernbedienten Fahrzeugs (100) umfasst:

Erfassen einer Umgebung des fernbedienten Fahrzeugs (100) durch den Sensor (120), um ein Erfassungsergebnis (S205) zu erhalten; wobei das Verfahren **dadurch gekennzeichnet ist, dass** es ferner umfasst
Erzeugen eines automatischen Fahrbefehls durch die Fahrzeugsteuervorrichtung (130) basierend auf dem Erfassungsergebnis (S210);
Berechnen eines automatischen Fahrweges durch eine automatische Fahrschaltung (131) gemäß dem Erfassungsergebnis;
Bestimmen des automatischen Fahrbefehls durch die automatische Fahrschaltung (131) gemäß dem automatischen Fahrweg;
Empfangen eines Fernfahrbefehls von einer Fernsteuerungsplattform (10) durch die Kommunikationsschaltung (110) (S220);
Bestimmen eines tatsächlichen Steuerbefehls durch die Fahrzeugsteuervorrichtung (130) basierend auf dem Fernfahrbefehl und dem automatischen Fahrbefehl, wenn der Fernfahrbefehl empfangen wird (S225, S235, S240); und
Bestimmen, ob der Fernfahrbefehl das fernbediente Fahrzeug (100) in einem unsicheren Zustand versetzt, durch eine Fahrspurhalteschaltung (132);
Übernehmen des Fernfahrbefehls als eigentlichen Steuerbefehl, wenn die Fahrspurhalteschaltung (132) bestimmt, dass der Fernfahrbefehl das fernbediente Fahrzeug (100) veranlasst nicht in dem unsicheren Zustand zu sein;
Modifizieren des Fernfahrbefehls durch die Fahrspurhalteschaltung (132) gemäß dem automatischen Fahrbefehl, um den tatsächlichen Steuerbefehl zu erhalten, wenn die Fahrspurhalteschaltung (132) bestimmt, dass der Fernfahrbefehl das fernbediente Fahrzeug (100) veranlasst in dem unsicheren Zustand zu sein;
Fahren des fernbedienten Fahrzeugs (100) durch die Fahrschaltung (140) gemäß dem aktuellen Steuerbefehl (S245).

6. Steuerverfahren des fernbedienten Fahrzeugs gemäß Anspruch 5, **dadurch gekennzeichnet, dass** der Schritt des Bestimmens, ob der Fernfahrbefehl das fernbedienten Fahrzeug (100) veranlasst in dem unsicheren Zustand zu sein, umfasst:

Berechnen eines Vorhersagewegs durch die Fahrspurhalteschaltung (132) gemäß dem Fernfahrbefehl; und
Bestimmen, ob der Fernfahrbefehl das fernbedienten Fahrzeug (100) veranlasst, von einem fahrbaren Bereich durch die Fahrspurhalteschaltung (132) gemäß dem Vorhersageweg abzuweichen.

7. Steuerverfahren des fernbedienten Fahrzeugs gemäß Anspruch 5, **dadurch gekennzeichnet, dass**
die Fahrzeugsteuervorrichtung (130) ein Sichtfeld-Bild des fernbedienten Fahrzeugs (100) empfängt und einen automatischen Fahrweg berechnet, der als automatischer Fahrbefehl dient, und der Schritt zum Bestimmen des tatsächlichen Steuerbefehls umfasst:

Bestimmen, ob der Fernfahrbefehl das fernbediente Fahrzeug (100) veranlasst in dem unsicheren Zustand durch eine Fahrspurhalteschaltung (132) zu sein; und
Einstellen eines Zielpunkts auf dem automatischen Fahrweg durch die Fahrspurhalteschaltung (132) und Übernehmen eines eingeschlossenen Winkels zwischen einer Richtung des fernbedienten Fahrzeugs (100) und einer Bewegungsrichtung des fernbedienten Fahrzeugs (100) von einer Position des fernbedienten Fahrzeugs (100) zum Zielpunkt als tatsächlichen Steuerbefehl durch die Fahrspurhalteschaltung (132), wenn die Fahrspurhalteschaltung (132) bestimmt, dass der Fernfahrbefehl das fernbediente Fahrzeug (100) veranlasst in dem unsicheren Zustand zu sein.

8. Steuerverfahren des fernbedienten Fahrzeugs gemäß Anspruch 5, **dadurch gekennzeichnet, dass** der Schritt zum Bestimmen des tatsächlichen Steuerbefehls umfasst:

Berechnen einer Gleichung C=(w)A+(1-w)B durch die Fahrspurhalteschaltung (132), um den tatsächlichen Steuerbefehl C zu erhalten, wobei A den automatischen Fahrbefehl darstellt, B den Fernfahrbefehl darstellt und ein Gewicht w eine reelle Zahl ist und $0 \leq w \leq 1$;

Einstellen des Gewichts w auf 0, wenn die Fahrspurhalteschaltung (132) bestimmt, dass der Fernfahrbefehl B das fernbediente Fahrzeug (100) veranlasst nicht in dem unsicheren Zustand zu sein; und

Einstellen des Gewichts w auf 1, wenn die Fahrspurhalteschaltung (132) bestimmt, dass das fernbediente Fahrzeug (100) den Fernfahrbefehl B von der Fernsteuerungsplattform (10) nicht empfangen kann.

**Revendications**

1. Véhicule télécommandé (100), comprenant :

   un circuit de communication (110) ;
   au moins un capteur (120) conçu pour détecter un environnement du véhicule télécommandé (100) ;
   un dispositif de commande de véhicule (130) couplé au circuit de communication (110) pour recevoir une commande d'entraînement à distance de la part d'une plate-forme de commande à distance (10), et couplé au capteur (120) pour recevoir un résultat de détection, le véhicule télécommandé (100) étant **caractérisé en ce que** le dispositif de commande de véhicule (130) génère une commande d'entraînement automatique en se basant sur le résultat de détection, et détermine une commande de contrôle réelle en se basant sur l'instruction d'entraînement à distance et l'instruction d'entraînement automatique lorsque la commande d'entraînement à distance est reçue ; et
   un circuit d'entraînement (140) couplé au dispositif de commande de véhicule (130) pour recevoir l'instruction de commande réelle, et conçu pour entraîner le véhicule télécommandé (100) en fonction de l'instruction de commande réelle,
   le dispositif de commande de véhicule (130) comprenant :

      un circuit d'entraînement automatique (131) couplé au capteur (120) pour recevoir le résultat de détection, et conçu pour calculer un parcours d'entraînement automatique en fonction du résultat de détection, et pour déterminer l'instruction d'entraînement automatique en fonction du parcours d'entraînement automatique ; et
      un circuit de maintien de voie (132), couplé au circuit d'entraînement automatique (131) pour recevoir l'instruction d'entraînement automatique, et couplé au circuit de communication (110) pour recevoir l'instruction d'entraînement à distance, et conçu pour déterminer si l'instruction d'entraînement à distance amène le véhicule télécommandé (100) dans une condition non sécurisée, le circuit de maintien de voie (132) déterminant que l'instruction d'entraînement automatique n'amène pas le véhicule télécommandé (100) en condition non sécurisée, le circuit de maintien de voie (132) considérant l'instruction d'entraînement à distance comme instruction de commande actuelle, sachant que, lorsque le circuit de maintien de voie (132) détermine que l'instruction d'entraînement à distance amène le véhicule télécommandé (100) en condition non sécurisée, le circuit de maintien de voie (132) modifie l'instruction d'entraînement à distance en fonction de l'instruction d'entraînement automatique pour obtenir l'instruction de commande réelle.

2. Véhicule télécommandé selon la revendication 1, **caractérisé en ce que** le circuit d'entraînement automatique (131) est couplé au capteur (120) pour recevoir une image de champ de vision du véhicule télécommandé (100), et est conçu pour calculer un parcours d'entraînement automatique destiné à faire office d'instruction d'entraînement automatique ; dans lequel, lorsque le circuit de maintien de voie (132) détermine que l'instruction d'entraînement à distance amène le véhicule télécommandé en condition non sécurisée, le circuit de maintien de voie (132) définit un point cible sur le parcours d'entraînement automatique, et considère un angle inclus entre une direction du véhicule télécommandé (100) et une direction de mouvement du véhicule télécommandé (100) depuis un emplacement du véhicule télécommandé (100) jusqu'au point cible comme instruction de commande réelle.

3. Véhicule télécommandé selon la revendication 1, **caractérisé en ce que** le circuit de maintien de voie (132) calcule un parcours prédictif en fonction de la commande d'entraînement à distance, et détermine si la commande d'entraînement à distance amène le véhicule télécommandé (100) à partir depuis une zone carrossable en fonction du parcours prédictif.

4. Véhicule télécommandé selon la revendication 1, **caractérisé en ce que** le circuit de maintien de voie (132) calcule une équation $C=(w)A+(1-w)B$ pour obtenir l'instruction de commande réelle C, A représentant la commande d'entraînement automatique, B représentant la commande d'entraînement à distance, et un poids w étant un nombre réel et $0 \leq w \leq 1$, le poids w étant défini à 0 lorsque le circuit de maintien de voie (132) détermine que la commande d'entraînement à distance B n'amène pas le véhicule télécommandé (100) en position non sécurisée, le poids w étant défini à 1 lorsque le circuit de maintien de voie (132) détermine que le véhicule télécommandé (100) est incapable de recevoir l'instruction d'entraînement à distance B de la part de la plate-forme de commande à distance (10).

**5.** Procédé de commande d'un véhicule télécommandé, le véhicule télécommandé (100) selon la revendication 1 comprenant un circuit de communication (110), au moins un capteur (120), un dispositif de commande de véhicule (130) et un circuit d'entraînement (140), le procédé de commande du véhicule télécommandé (100) comprenant :

    la détection d'un environnement du véhicule télécommandé (100) par le capteur (120) pour obtenir un résultat de détection (S205) ; ce procédé étant **caractérisé en ce qu'**il comprend en outre

    la génération d'une commande d'entraînement automatique par le dispositif de commande de véhicule (130) en se basant sur le résultat de détection (S210) ;

    le calcul d'un parcours d'entraînement automatique par un circuit d'entraînement automatique (131) en fonction du résultat de détection ;

    la détermination de la commande d'entraînement automatique par le circuit d'entraînement automatique (131) en fonction du parcours d'entraînement automatique ;

    la réception d'une instruction d'entraînement à distance de la part d'une plate-forme de commande à distance (10) par le circuit de communication (110) (S220) ;

    la détermination d'une instruction de commande réelle par le dispositif de commande de véhicule (130) en se basant sur l'instruction d'entraînement à distance et l'instruction d'entraînement automatique lorsque l'instruction d'entraînement à distance est reçue (S225,S235,S240) ; et

    la détermination si l'instruction d'entraînement à distance amène le véhicule télécommandé (100) en condition non sécurisée par un circuit de maintien de voie (132) ;

    la considération de l'instruction d'entraînement à distance comme instruction de commande réelle lorsque le circuit de maintien de voie (132) détermine que l'instruction d'entraînement à distance n'amène pas le véhicule télécommandé (100) en condition non sécurisée ;

    la modification de l'instruction d'entraînement à distance par le circuit de maintien de voie (132) en fonction de l'instruction d'entraînement automatique pour obtenir l'instruction de commande réelle lorsque le circuit de maintien de voie (132) détermine que l'instruction d'entraînement à distance amène le véhicule télécommandé (100) en condition non sécurisée ;

    l'entraînement du véhicule télécommandé (100) par le circuit d'entraînement (140) en fonction de l'instruction de commande réelle (S245).

**6.** Procédé de commande du véhicule télécommandé selon la revendication 5, **caractérisé en ce que** l'étape de détermination si l'instruction d'entraînement à distance amène le véhicule télécommandé (100) dans une condition non sécurisée comprend :

    le calcul d'un parcours prédictif par le circuit de maintien de voie (132) en fonction de l'instruction d'entraînement à distance ; et

    la détermination si l'instruction d'entraînement à distance amène le véhicule télécommandé (100) à sortir d'une zone carrossable par le circuit de maintien de voie (132) en fonction du parcours prédictif.

**7.** Procédé de commande du véhicule télécommandé selon la revendication 5, **caractérisé en ce que**

le dispositif de commande de véhicule (130) reçoit une image de champ de vision du véhicule télécommandé (100), et calcule un parcours d'entraînement automatique destiné à faire office d'instruction d'entraînement automatique, et l'étape de détermination de l'instruction de commande actuelle comprend :

    la détermination si l'instruction d'entraînement automatique amène le véhicule télécommandé (100) en condition non sécurisée par un circuit de maintien de voie (132) ; et

    la définition d'un point cible sur le parcours d'entraînement automatique par le circuit de maintien de voie (132), et la considération d'un angle inclus entre une direction du véhicule télécommandé (100) et une direction de mouvement du véhicule télécommandé (100) depuis un emplacement du véhicule télécommandé (100) jusqu'au point cible comme instruction de commande réelle par le circuit de maintien de voie (132) lorsque le circuit de maintien de voie (132) détermine que l'instruction d'entraînement à distance amène le véhicule télécommandé (100) en condition non sécurisée.

**8.** Procédé de commande du véhicule télécommandé selon la revendication 5, **caractérisé en ce que** l'étape de détermination de l'instruction de commande réelle comprend :

le calcul d'une équation C=(w)A+(1-w)B par le circuit de maintien de voie (132) pour obtenir l'instruction de commande réelle C, A représentant la commande d'entraînement automatique, B représentant la commande d'entraînement à distance, et un poids w étant un nombre réel et $0 \leq w \leq 1$ ;

la définition du poids w à 0 lorsque le circuit de maintien de voie (132) détermine que la commande d'entraînement à distance B n'amène pas le véhicule télécommandé (100) en condition non sécurisée ; et

la définition du poids w à 1 lorsque le circuit de maintien de voie (132) détermine que le véhicule télécommandé (100) est incapable de recevoir l'instruction d'entraînement à distance B de la part de la plate-forme de commande à distance (10).

FIG. 1

Wait for a remote driving command — S215

Sense an environment of a TOV — S205

Is the remote driving command received? — S220

Generate an automatic driving command — S210

No

Yes

Does the remote driving command make the TOV to be in an unsafe condition? — S230

No

S235

Yes

Take the remote driving command as the actual control command

Modify the remote driving command according to the automatic driving command, so as to obtain the actual control command — S240

Take the automatic driving command as an actual control command — S225

Drive the TOV according to the actual control command — S245

FIG. 2

EP 3 333 662 B1

FIG. 3

FIG. 4

FIG. 5

FIG. 6

**EP 3 333 662 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016334230 A1
- US 2016139594 A1
- US 2016358475 A1